# EUROPÄISCHE PATENTSCHRIFT

(11) **EP 2 957 023 B1**
(45) Veröffentlichungstag und Bekanntmachung des Hinweises auf die Patenterteilung: **29.03.2017**
(21) Anmeldenummer: 14702050.7
(22) Anmeldetag: 03.02.2014
(51) Int. Cl.: H02K 15/095

(54) **DÜSENAUFHÄNGUNG UND WICKELVORRICHTUNG**
NOZZLE SUSPENSION AND WINDING DEVICE
SUSPENSION DE BUSE ET DISPOSITIF D'ENROULEMENT

(30) Priorität: 15.02.2013 CH 464132013
(43) Veröffentlichungstag der Anmeldung: 23.12.2015
(73) Patentinhaber: SMZ Wickel- und Montagetechnik AG, 5436 Würenlos (CH)
(72) Erfinder: LANG, Anton, CH-4600 Olten (CH); BOLLI, Thomas, CH-5313 Klingnau (CH); NOETZLI, Christian, CH-8180 Bülach (CH); ELELE, Hasan, CH-5400 Baden (CH)
(74) Vertreter: Strässle, Simon
(86) Internationale Anmeldenummer: PCT/EP2014/052009
(87) Internationale Veröffentlichungsnummer: WO 2014/124828

(56) Entgegenhaltungen:
- EP-A1- 0 200 236
- EP-A1- 2 512 013
- EP-A2- 0 208 811
- WO-A2-2009/106273
- JP-A- 2000 245 121
- JP-A- 2003 264 968
- JP-A- 2004 064 984
- JP-A- 2004 328 844
- JP-A- 2012 186 922
- US-A- 2 445 937
- US-A- 3 253 793
- US-A- 5 413 289

## Beschreibung

### TECHNISCHES GEBIET

Die vorliegende Erfindung betrifft eine Düsenaufhängung für eine Wickeldüse nach dem Oberbegriff des Anspruchs 1, eine Wickelvorrichtung nach dem Oberbegriff des Anspruchs 9, eine Wickeldüse nach dem Oberbegriff des Anspruchs 13 und ein Verfahren zur Wicklung eines Wickelköpers mit einer solchen Vorrichtung.

### STAND DER TECHNIK

Ein verbreitetes Problem bei der Herstellung von spulenartigen Wickelkörpern aus isoliertem Kupferdraht durch Wicklung des Drahtes auf einen Trägerkörper ist eine Ausbauchung der Wicklung des Wickelkörpers nach Ablage des Wickelguts bzw. nach teilweisem Wegfall der Zugspannung der Wickelvorrichtung. Dieses Problem ist im Falle von Trägerkörpern mit nicht kreisförmiger, konvexer Querschnittsgestalt besonders gravierend.

In der EP 2 512 413 A1 wird dieses Problem der Ausbauchung in einer Richtung axial zum Wickelkörper dadurch gelöst, dass der Zuführkanal für Wickelgut im Mündungsbereich der Wickelnadel in die Ablagerichtung des Wickelguts gerichtet und ein Mittel in axialer Richtung unterhalb der Mündungsöffnung vorgesehen wird, welches das Wickelgut in axialer Richtung von unten derart angepresst vorformt, dass eine axiale Ausbauchung der Wickelstrangs effizient verhindert wird. Dies lässt jedoch das Problem der radialen Ausbauchung weitestgehend unberührt.

Die JP 2003 264968 A, JP 2004 328 844 A, JP 2012 186922 A und EP 0 200 236 A1 zeigen ebenfalls eine Wickelvorrichtung und ein Wickelverfahren eingangs genannter Art, wobei das Problem der radialen Ausbauchung auftritt.

### DARSTELLUNG DER ERFINDUNG

Es ist eine Aufgabe der vorliegenden Erfindung, eine Düsenaufhängung für eine Wickeldüse anzugeben, welche die Herstellung eines Wickelkörpers mit verminderter radialer Ausbauchung erlaubt.
Diese und weitere Aufgaben werden durch eine Düsenaufhängung für mindestens eine Wickeldüse, insbesondere zur Herstellung einer elektrischen Spule auf einem Trägerkörper, wobei die Düsenaufhängung, mindestens eine Düsenaufnahme für die Wickeldüse zur drehfesten und positionsgerechten Aufnahme und Befestigung der Wickeldüse in der Düsenaufnahme aufweist, wobei die Düsenaufnahme derart rotierbar bezüglich der Düsenaufhängung in der Düsenaufhängung gelagert ist, dass die in der Düsenaufnahme aufgenommene Wickeldüse um eine quer zu einer Ablagerichtung von aus der Wickeldüse austretendem Wickelgut stehenden Längsachse der Wickeldüse rotierbar gelagert ist, dadurch gelöst, dass eine Drehposition der Düsenaufnahme mittels der Düsenaufhängung aktiv regelbar ist, wobei, wenn die Drehposition der Düsenaufnahme mittels der Düsenaufhängung derart geregelt ist, dass das Wickelgut vor der Freigabe von der Mündungsfläche der Wickeldüse in Ablagerichtung von einer fest auf der Mündungsfläche der Wickeldüse und beabstandet zur Längsachse angeordneten Anlagefläche elastisch bis plastisch durch Gegenbiegung derart vorgeformt ist, dass sich das Wickelgut nachhaltig dicht an den Trägerkörper anlegt, wobei eine Wirkung der Anlagefläche über eine zyklische Regelung der Drehposition der Düsenaufnahme zyklisch regelbar ist, indem ein Schnittwinkel der Anlagefläche mit einer Tangentialfläche des Trägerkörpers durch einen Ablagepunkt des Wickelguts auf dem Trägerkörper über die regelbare Drehposition der Düsenaufnahme geregelt wird.
Gegenbiegung ist hierbei so zu verstehen, dass die Anlagefläche nicht parallel zur Ablagefläche auf dem Trägerkörper verläuft, sondern verdreht dazu steht. Hierbei ist die Ablagefläche die Tangentialfläche zum Trägerkörper am Berührungspunkt des Wickelguts auf dem Trägerkörper. Wenn die Wicklung in einem ersten Drehsinn (bspw. dem Uhrzeigersinn) stattfindet, so ist die Anlagefläche bezüglich der Ablagefläche im anderen Drehsinn (im vorgenannten Beispiel also im Gegenuhrzeigersinn) aus der tangentialen Richtung verdreht. Diese Verdrehung kann vorzugsweise einen Drehwinkel von etwa 10° bis 85° zwischen der Tangentialrichtung und der Richtung der Anlagefläche aufweisen. Die tangentiale Richtung ist im Wesentlichen die Richtung der vorgenannten Tangentialfläche, also die Richtung des Wickelguts, welches zwischen den beiden Auflagepunkten am Tragekörper und an der Wickeldüse verläuft.

Es ist also ein Aspekt der vorliegenden Erfindung, eine Rotationsstellung der Düsenaufnahme, und damit der darin festgestellten Wickeldüse, bezüglich einer Rotationsachse der Düsenaufnahme zyklisch zu regeln. Die Rotationsachse steht hierbei quer zur Ablagerichtung des Wickelguts und ist im Wesentlichen parallel zu einer Tangentialebene des Trägerkörpers. Die Rotationsachse steht also im Wesentlichen senkrecht auf einer Ebene, welche durch die relative Umkreisung der Wickeldüse um den Trägerkörper beschrieben wird. Der Begriff "zyklisch" ist hierbei so zu verstehen, dass die Regelung auf einen Wickelzyklus abgestimmt ist, wobei die Regelung von der Querschnittsform des Trägerkörpers abhängt und an diesen angepasst ist. Die Drehposition kann also in Abhängigkeit der relativen Position der Düsenaufnahme und des Trägerkörpers eingestellt werden.

Bevorzugt wird hier eine Düsenaufhängung mit einer Regeleinheit, mittels welcher eine Drehbewegung der Düsenaufnahme derart regelbar ist, dass die Düsenaufnahme in einer frei wählbaren, vordefinierten Drehposition relativ zum Trägerkörper positionierbar ist.

Dadurch, dass die Drehposition der Düsenaufnahme regelbar ist, ist auch die Drehposition der drehfest in der Düsenaufnahme festgestellten Wickeldüse regelbar. Wird nun bspw. eine Wickeldüse verwendet, welche auf ihrer Mündungsfläche eine von der Rotationsachse der Wickeldüse beabstandet angeordnete Anlagefläche für das Wickelgut aufweist, derart, dass die Anlagefläche eine Querkraft auf das austretende Wickelgut ausübt, so ist die Wirkung der Anlagefläche über einen Wickelzyklus über die regelbare Drehposition der Wickeldüse regelbar. Somit kann also bspw. ein Winkel zwischen der Anlagefläche und einer Tangentialfläche des Trägerkörpers über einen Wickelzyklus geregelt werden.

Durch die Regeleinheit ist die Drahtdüse (d.h. die Wickeldüse) positionsüberwacht arretierbar, d.h. die Drehposition ist frei wählbar und über eine Maschinensteuerung stellbar.

Somit kann die Wickeldüse mittels der Anlagefläche eine genau durch ihre Drehstellung definierte Gegenkraft bzw. Querkraft auf den Wickeldraht ausüben und bewirkt dadurch eine Gegenbiegung im Wickeldraht, was dazu führt, dass ein Ausbauchen des Wickelkörpers in radialer Richtung verringert oder sogar ganz eliminiert wird.

Es ist also ein Aspekt der Erfindung, dass durch eine Regelung der besagten Drehposition der Wickeldüse eine definierte Vorbehandlung oder Vorbelastung des Wickelguts eingebracht wird. Besonders bevorzugt ist, dass eine Drehbewegung der Düsenaufnahme, und damit auch der darin festgestellten Düse, im Wesentlichen durch die Regeleinheit gebildet aus oder umfassend einen Drehregler und eine Bremseinheit oder gebildet aus oder umfassend einen geregelten Antrieb und durch das Ablegen von durch die Wickeldüse zugeführtem Wickelgut auf dem Trägerkörper hervorgerufen ist, und dass die Drehbewegung durch die Regeleinheit zyklisch regelbar ist, derart, dass die Drehposition der Düsenaufnahme zum Trägerkörper auf das Wickelgut zyklisch regelbar ist.

Dadurch ist die Drehposition der Düsenaufnahme derart zyklisch regelbar, dass die Anlagefläche in bestimmbarer Weise in Abhängigkeit einer relativen translatorischen Stellung der Düsenaufnahme zum Trägerkörper auf das Wickelgut wirkt. Dies ist vorteilhaft, da so die Vorbelastung des Wickelguts auf die Querschnittsgestalt des Trägerkörpers anpassbar ist und das Wickelgut nur dann einer Vorbelastung unterworfen wird, wenn die Ablageposition auf dem Trägerkörper dies erfordert. Solche Ablagepositionen, welche eine Vorbelastung benötigen, sind insbesondere Abschnitte des Trägerkörpers, welche sich in konvexer Art zwischen zwei vom Trägerkörper dem Wickelgut entgegengestellten Biegepunkten nach aussen wölben.

Vorzugsweise umfasst die Düsenaufhängung eine Regeleinheit gebildet durch einen Drehregler und eine Bremseinheit, wobei die Drehbewegung der Düsenaufnahme im Wesentlichen durch das Ablegen von durch die Wickeldüse zugeführtem Wickelgut auf dem Trägerkörper hervorgerufen und durch die Bremseinheit bremsend geregelt ist, wobei die Düsenaufhängung, weiter einen Drehregler umfasst, welcher die Drehposition der Düsenaufnahme erfasst und der Bremseinheit zur Regelung zur Verfügung stellt. Über das Wechselspiel der Zugspannung des Wickelguts und der Bremswirkung der Bremseinheit ist die Drehposition aktiv regelbar.

Vorteilhafterweise umfasst die Bremseinheit ein Schnellschaltventil, über welches die Bremseinheit vorzugsweise über ein Druckfluid betätigbar ist.

Eine Bremswirkung auf die rotierende Düsenaufnahme, erzeugt durch ein von der Bremseinheit auf die rotierbare Düsenaufnahme übertragenes Gegendrehmoment, ist vorzugsweise im Bereich von 0.1 bis 5 Newtonmeter pro Wickeldüse.

Eine alternative Ausführungsform umfasst eine Regeleinheit mit einem geregelten Antrieb, einem Servomotor, mittels welchem die Drehbewegung der Düsenaufnahme aktiv regelbar ist.

Gemäss einem Ausführungsbeispiel weist die Düsenaufhängung eine Vielzahl von Düsenaufnahmen für jeweils eine Wickeldüse auf, wobei diese Düsenaufnahmen vorzugsweise in mindestens einer Reihe angeordnet und zur Linearwicklung einer Vielzahl von Wickelkörpern geeignet sind.

Bevorzugt ist eine Düsenaufhängung, bei welcher die Düsenaufnahmen über ein Getriebe untereinander drehgekoppelt sind, wobei gegebenenfalls die Bremseinheit und/oder der Drehregler und/oder der geregelte Antrieb vorzugsweise direkt auf dieses Getriebe wirken.

Es ist eine weitere Aufgabe der vorliegenden Erfindung, eine Wickelvorrichtung zur Verwendung einer solchen Düsenaufhängung anzugeben.

Diese und weitere Aufgaben werden durch eine Wickelvorrichtung umfassend eine Düsenaufhängung wie oben beschrieben, dadurch gelöst, dass eine Trägeraufnahme für die Befestigung des Trägerkörpers vorgesehen ist, wobei die Wickelvorrichtung eingerichtet ist, die Wickeldüse in der Düsenaufnahme und den Trägerkörper in einer Relativbewegung zu einander umeinander herumzuführen. Vorzugsweise umfasst diese Wickelvorrichtung auch eine Wickeldüse wie unten beschrieben.
Es ist eine weitere Aufgabe der vorliegenden Erfindung, ein Wickelverfahren zur Herstellung von Wickelkörpern anzugeben, welches eine radiale Ausbauchung minimiert.

Diese und weitere Aufgaben werden durch ein Verfahren zur Wicklung eines Wickelkörpers unter Verwendung einer vorgenannten Düsenaufhängung und/oder Wickelvorrichtung, dadurch gelöst, dass ein strangförmiges Wickelgut nach Zuführung durch eine Wickeldüse unter einer Vorspannung in Ablagerichtung von der Wickeldüse auf einen Trägerkörper abgelegt wird, wobei das Wickelgut vor der Freigabe von der Mündungsfläche der Wickeldüse in Ablagerichtung von einer fest auf der Mündungsfläche der Wickeldüse und beabstandet zur Längsachse der Wickeldüse angeordneten Anlagefläche, wobei die Anlagefläche im Wesentlichen parallel zur Längsachse steht elastisch bis plastisch durch Gegenbiegung vorgeformt wird, derart, dass sich das Wickelgut nachhaltig dicht an den Trägerkörper anlegt, wobei eine Wirkung der Anlagefläche über eine zyklische Regelung der Drehposition der Düsenaufnahme zyklisch geregelt ist, indem ein Schnittwinkel der Anlagefläche mit einer Tangentialfläche des Trägerkörpers durch einen Ablagepunkt des Wickelguts auf dem Trägerkörper über die regelbare Drehposition der Düsenaufnahme geregelt wird.

Vorzugsweise umfasst das Verfahren den Schritt, dass eine Drehstellung oder Drehposition der Wickeldüse relativ zum Trägerkörper mittels eines Drehreglers und unter Ausnutzung der Vorspannung des Wickelguts oder mittels eines geregelten Antriebs zyklisch und passend auf den Trägerköper eingestellt wird, vorzugsweise unter Zuhilfenahme einer Bremseinheit wie oben erwähnt, derart, dass das Wickelgut unter einer vordefinierten Vorbelastung in die Ablagerichtung geführt wird.

Als Wickelgut wird vorzugsweise ein strangförmiger elektrischer Leiter, insbesondere ein isolierter Metalldraht, bspw. ein Kupferdraht, vorzugsweise mit einem Durchmesser von 0.5 bis 2 Millimeter verwendet.
Ein Aspekt der vorliegenden Erfindung ist es also, eine Düsenaufhängung, eine Wickelvorrichtung und/oder ein Verfahren anzugeben, so dass die Düse derart geregelt wird, dass eine Vorbelastung oder ein Vorbiegen des Wickelguts in radialer Richtung bezüglich des Trägerkörpers stattfindet. Dieses Vorbiegen ist ein Gegenbiegen, also ein Vorbiegen in die Gegenrichtung der Auswölbung des Trägerkörpers und führt dazu, dass die radiale "Bauchung" des Wickelguts durch die Regelung der Drahtdüsenstellung verringert oder verhindert wird. Dabei wird das Wickelgut, also bspw. der Draht, durch die Position und durch die Form der Düse in die die entgegengesetzte Richtung der "Bauchung" vorgebogen oder derartig vorbelastet. Dieses Vorbiegen wirkt dann beim Bewickeln dem radialen "Bauchungs-Effekt" entgegen und der Wickeldraht kann gerade entlang des Trägerkörpers verlegt werden.
Es ist eine weitere Aufgabe der vorliegenden Erfindung eine Wickelnadel oder Wickeldüse für eine vorgenannte Düsenaufhängung anzugeben, welche es im Zusammenspiel mit der Düsenaufhängung erlaubt, eine radiale Ausbauchung von Wicklungen eines Wickelkörpers zu minimieren.
Diese und weitere Aufgaben werden durch eine Wickeldüse für eine vorgenannte Düsenaufhängung zur Ablage von strangförmigem Wickelgut auf einen Trägerkörper, insbesondere zur Herstellung einer elektrischen Spule, wobei die Wickeldüse eine Längsachse und einen im Wesentlichen der Längsachse folgenden und vorzugsweise geradlinigen Zuführkanal zur Zuführung des Wickelguts aufweist, wobei der Zuführkanal in einer Mündungsöffnung zur Abgabe des Wickelguts endet, wobei diese Mündungsöffnung in einer quer zur Längsachse stehenden Mündungsfläche liegt, dadurch gelöst, dass mindestens eine fest bezüglich der Mündungsfläche angeordnete und sich an die Mündungsfläche vorzugsweise unmittelbar anschliessende Anlagefläche zur Führung des Wickelguts in einer Querrichtung zur Längsachse vorgesehen ist, und dass diese Anlagefläche derart relativ zur Mündungsöffnung angeordnet ist, dass durch Rotieren der Wickeldüse um die Längsachse eine Wirkung der Anlagefläche auf das Wickelgut und insbesondere eine Orientierung der Anlagefläche zum Trägerkörper veränderbar ist.
Die Anlagefläche steht im Wesentlichen parallel zur Längsachse. Ein Schnittwinkel der Anlagefläche mit einer Tangentialfläche des Trägerkörpers ist über die regelbare Drehposition der Wickeldüse regelbar, womit die Wirkung der Anlagefläche auf das Wickelgut regelbar ist.

Die Anlagefläche ist vorzugsweise beabstandet zur Rotationsachse der Wickeldüse, d.h. zu deren Längsachse angeordnet. Die Mündungsöffnung liegt quer zur Längsachse, liegt in einer die Wickeldüse axial abschliessenden Mündungsfläche, von welcher das Wickelgut zur Ablage auf den Trägerkörper abgegeben wird.

Es wird bevorzugt, dass auf der axialen bzw. distalen Mündungsfläche, da wo das Wickelgut aus der Düse austritt, eine Nut mit Seitenwänden zur Aufnahme des aus der Mündungsöffnung austretenden Wickelguts angeordnet ist, wobei mindestens eine der Seitenwände die Anlagefläche bildet. Diese Nut ist vorzugsweise in die Mündungsfläche eingelassen. Alternativ können die Seitenwände von der Mündungsfläche abragen. Die Nut verläuft entlang einer Querachse quer zur Längsachse, also in radialer Richtung bezüglich der Längsachse der Wickeldüse und kann einen Boden mit axialer Neigung aufweisen. Die Tiefe der Nut kann also vom Abstand zur Mündungsöffnung abhängen. Diese Wickeldüse mit Nut eignet sich insbesondere in Anwendungen der Linearwickeltechnologie, bspw. zur Herstellung von Hochleistungselektromotoren.
Die Nut erstreckt sich entlang der Querachse, welche im Wesentlichen rechtwinklig zur besagten Längsachse verläuft, wobei die Seitenwände der Nut vorzugsweise eine Krümmung um die Querachse aufweisen.

Diese Konstruktion erlaubt eine einfache, einstückige Ausbildung der Wickeldüse, ohne dass zusätzliche bewegliche Teile angebracht sein müssen, welche die Anlagefläche bilden. Besonders bevorzugt wird eine geschlossene Wickeldüse, welche das Wickelgut in einem von der Düse vollständig lateral umgebenen Zuführkanal führt.

Die Nut auf der Mündungsfläche erstreckt sich von der axialen Mündungsöffnung quer zur Seite hin und durchstösst eine seitliche Mantelfläche der Wickeldüse bzw. des Wickelkörpers, so dass das Wickelgut im Wesentlichen quer zur Längsachse des Wickelkörpers aus der Düse austritt.

Es wird bevorzugt, dass eine Breite der Nut 50% bis 150% eines Durchmessers des Zuführkanals, vorzugsweise 100% des Durchmessers des Zuführkanals beträgt, und dass eine Tiefe der Nut 30% bis 100% des Durchmessers des Zuführkanals, vorzugsweise 50% des Durchmessers des Zuführkanals beträgt. Der Zuführkanal kann hierbei bspw. einen Durchmesser von 1.5 Millimeter bis 4 Millimeter haben.

Vorzugsweise ist eine Querschnittsgestalt der Nut, insbesondere im Bereich, wo das Wickelgut die Nut verlässt, im Wesentlichen teilkreisförmig, vorzugsweise halbkreisförmig.

Die von der Mündungsfläche axial in Längsrichtung offene Nut setzt dem durchgeführten Wickelgut nur minimalen Laufwiderstand entgegen. Zudem erlaubt die Nut-Konstruktion eine einfache Herstellung der Düse unter minimalen Materialaufwand, was vorteilhaft für die bewegte Düse ist und optimale Stabilität ermöglicht.

Die Nut kann mit den Seitenwänden das Wickelgut geringfügig aus axialer Richtung übergreifen und so in der Nut halten.

Weiter wird bevorzugt, dass sich der Zuführkanal in axialer Richtung zur Mündungsöffnung hin konisch erweitert und/oder Materialkanten im Bereich, in welchem das Wickelgut geführt ist, abgerundet sind.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivisch Ansicht einer erfindungsgemässe Wickeldüse;
- Fig. 2: die Wickeldüse nach Fig. 1 in einer Seitenansicht;
- Fig. 3: die Wickeldüse nach Fig. 1 in einer Frontalansicht;
- Fig. 4: die Wickeldüse nach Fig. 1 in einer axialen Ansicht;
- Fig. 5: die Wickeldüse nach Fig. 1 mit einem durchgeführten Wickeldraht;
- Fig. 6: die Wickeldüse nach Fig. 5 in einem Querschnitt;
- Fig. 7: eine perspektivische Ansicht von hinten auf eine Wickelvorrichtung mit mehreren Wickeldüsen nach Fig. 1;
- Fig. 8: die Wickelvorrichtung nach Fig. 7 in einer perspektivischen Ansicht von vorne;
- Fig. 9: die Wickelvorrichtung nach Fig. 7 in einer Frontalansicht;
- Fig. 10: die Wickelvorrichtung nach Fig. 7 in einer Draufsicht;
- Fig. 11: die Wickelvorrichtung nach Fig. 10 in einer Längsschnittansicht;
- Fig. 12: die Wickelvorrichtung nach Fig. 8 in einer ersten Querschnittsansicht von der Seite; und
- Fig. 13: die Wickelvorrichtung nach Fig. 12 in einer zweiten Querschnittsansicht von der Seite.

### BESCHREIBUNG BEVORZUGTER AUSFÜHRUNGSFORMEN

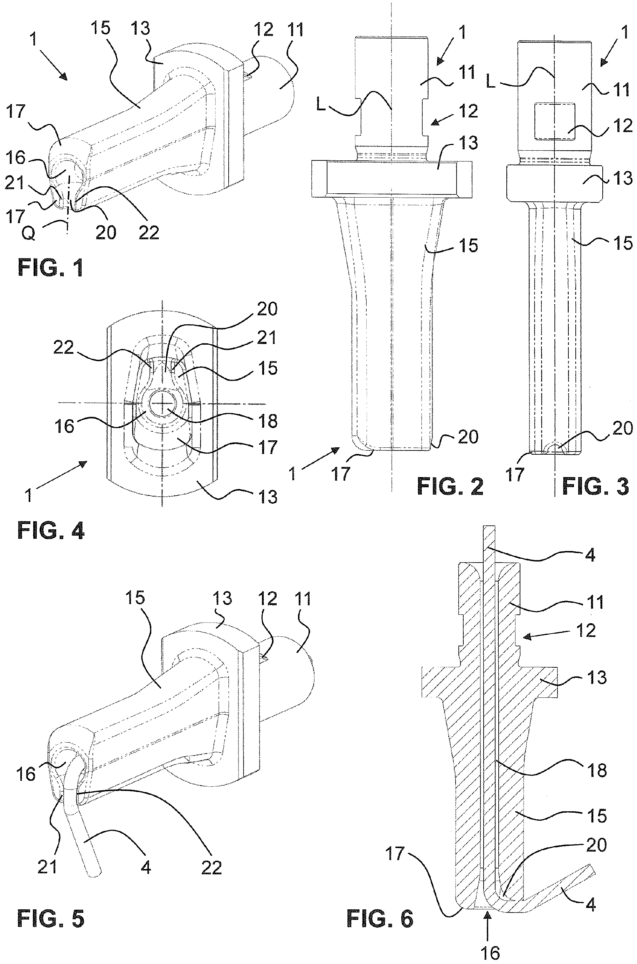

**Figuren 1** bis **4** zeigen eine bevorzugte Ausführungsform einer erfindungsgemässen Wickeldüse 1 oder Wickelnadel in einer perspektivischen Ansicht, von der Seite, in einer Frontalansicht und in einer axialen Ansicht.

Die Wickeldüse 1, geeignet für den Einsatz in der Fertigung von Wickelkörpern aus Wickelgut 4 mittels Nadelwickeltechnologie, bspw. zur Herstellung von elektrischen Drahtspulen für Elektromotoren, weist einen länglichen, im Wesentlichen zylinderförmigen Düsenkörper 15 mit einer Längsachse L und einer austrittseitig des Wickelguts 4 liegenden distalen Mündungsfläche 17 auf. An den Düsenkörper 15 schliesst sich axial in Längsrichtung ein Düsenflansch 13 und daran wiederum ein Düsenschaft 11 an. Der Düsenflansch 13 überragt den Düsenkörper 15 zu allen Seiten quer zur Längsachse L. Die Wickeldüse 1 ist mit dem Düsenschaft 11 in eine entsprechende Düsenausnehmung oder ein Düsenfutter 55 (s. unten) einer Aufhängung derart einschiebbar, bis der Flansch 13 zum Anschlag an der Aufhängung kommt. Der eingeschobene Schaft 11 ist über Eingriffselemente oder Verriegelungselemente 56 der Aufhängung 50, welche formschlüssig in die Aussparungen oder Verriegelungsausnehmungen 12 des Schafts 11 eingreifen, feststellbar. Der Düsenschaft 11 verankert den Düsenkörper 15 positionsgerecht und drehfest in der Düsenausnehmung 55 der Aufhängung 50. Weiter stützt der Düsenflansch 13 den Düsenkörper 15 bei quer zur Längsachse L auf den Düsenkörper 15 einwirkenden Kräften seitlich ab. Schaft 11, Flansch 13 und Düsenkörper 15 sind entsprechend den erfahrungsgemäss beim Wickeln auftretenden Kräften dimensioniert und einstückig zur Wickeldüse 1 geformt.

**Figuren 5** und **6** zeigen die Wickeldüse 1 nach Figuren 1 bis 4, wobei ein Wickeldraht 4 durch einen Zuführkanal 18 der Düse 1 gezogen ist. Anhand von Fig. 6, welche einen Längsschnitt durch die Düse 1 in der Ansicht nach Fig. 2 zeigt, ist erkennbar, dass sich der Zuführkanal 18 durchgehend entlang der Achse L mittig durch den Schaft 11, Flansch 13 und Düsenkörper 15 erstreckt.

Im freistehenden Bereich des Schafts 11, durch welchen der Draht 4 in die Düse 1 eintritt, ist der Zuführkanal 18 seitlich trichterartig abgerundet, derart, dass dem Draht 4 keine scharfen Kanten entgegenstehen und eintrittseitig eine führende Eintrittsöffnung in die Düse 1 bereitgestellt ist. Im austrittseitigen Mündungsbereich des Wickelkörpers 15 erweitert sich der Zuführkanal 18 konisch gegen die Mündungsfläche 17 (s. insbesondere Fig. 6).

Wie in Figuren 1, 4 und 6 erkennbar ist, weist der Düsenkörper 15 einen länglichen Querschnitt auf, woraus eine im Wesentlichen rechteckige Mündungsfläche 17 resultiert. Der Düsenkörper 15 ist zur Austrittsseite hin konisch verengend geformt. Im Bereich einer Schnittkurve der Mündungsfläche 17 und einer Mantelfläche des Düsenkörpers 15 sind somit als äussere Kanten zwei Langkanten und zwei Kurzkanten gebildet, wobei diese äusseren Kanten abgerundet sind.

Wie in Figuren 2 und 3 erkennbar ist, sind diese Langkanten länger als ein Durchmesser des zylindrischen Schafts 11, während die besagten Kurzkanten kürzer als dieser Durchmesser sind. Der Schaft 11 misst in Längsrichtung etwa die Hälfte der Längsausdehnung des Wickelkörpers 15, eine Stärke der Flanschplatte 13 entspricht etwa einem Radius des Schafts 11.

Der Zuführkanal 18 ist von kreisrunder Querschnittsgestalt mit einem Durchmesser, der etwa ein Viertel der austrittseitigen Langkante des Wickelkörpers 15 beträgt und erweitert sich im Bereich der Mündungsfläche 17 in eine im Wesentlichen kreisrunde Mündungsöffnung 16 auf der Mündungsfläche 17 mit etwa 50% bis 100% grösserem Radius als Kanal 18.

Von der Mündungsöffnung 16 erstreckt sich mittig auf der Mündungsfläche 17, im Wesentlichen parallel zwischen deren Langkanten, eine Nut 20, welche Seitenwände 21 und 22 aufweist. Die Nut verläuft entlang der Querachse Q, welche im Wesentlichen senkrecht zur Längsachse L des Wickelkörpers 15 steht. Die Nut 20 ist also in die Mündungsfläche 17 eingelassen und verbindet die Mündungsöffnung 16 mit einer Kurzkante der Mündungsfläche 17 und bildet so einen durchgehenden Kanal von der Mündungsöffnung 16 parallel zur Mündungsfläche 17. Die Nut 20 weist einen gerundeten Boden auf, welcher sich an das Wickelgut 4 anschmiegt und stufenlos in die Seitenwände 21, 22 übergeht. Die Mündungsöffnung 16 und die Nut 20 gehen ebenfalls stufenlos ineinander über und bilden in einer axialen Ansicht in Richtung der Längsachse L eine tropfen- oder birnenförmige oder radial einseitig deformierte Vertiefung in der Mündungsfläche 17.

Der Draht 4 wird dann schaftseitig in die Wickeldüse 1 eingeführt, durch den Zuführkanal 18 gezogen und im Bereich der Mündungsöffnung 16 um etwa 90 quer zur Längsachse L in die Mündungsfläche 17 gebogen, verläuft dann weiter formschlüssig in der Tiefe der Nut 20 durch die Seitenwände 21 und 22 flankiert durch die Nut 20 und durchstösst die seitliche Mantelfläche des Düsenkörpers 15 zum Austritt aus der Wickeldüse 1.

Beim Austritt aus der Nut 20 wird der Draht 4 aufgrund der Zugspannung auf dem Draht 4 aus Ablagerichtung und durch den Wegfall der seitlichen Stützung der Seitenwand 21, 22 in die Ablagerichtung gebogen und zum Trägerkörper geführt. Zur verletzungsfreien Abgabe des Wickelguts 4 weist die Nut 20 im Mündungsbereich ebenfalls gerundete Kanten auf. Eine lichte Weite der Nut 20, bzw. deren Durchmesser entspricht im Austrittsbereich der Nut 20 etwa dem Durchmesser des Kanals 18 und erweitert sich, nach einem breitenmässig im Wesentlichen konstanten Nutabschnitt, gegen die Mündungsöffnung 16.

Wie aus Fig. 6 ersichtlich ist, kann der Draht 4 in axialer Richtung gebogen werden (in Fig. 6 nach oben). Zusätzlich oder alternativ, je nach relativer Lage zwischen Nut 20 und Trägerkörper, kann der Draht 4 auch in tangentialer Richtung gebogen werden, so dass der Draht 4 um einen Endbereich einer Seitenwand 21, 22 der Nut 20 als Biegekante gebogen wird (in Fig. 6 aus oder in die Zeichenebene). Dieses tangentiale Biegen des Drahtes 4 führt aufgrund der relativen Lage der Nut 20 zum Trägerkörper, also insbesondere aufgrund der relativen Drehposition der Wickeldüse 1 zum Trägerkörper, zu einer radialen Vorbelastung elastischer oder plastischer Natur des duktilen Drahtes 4 beim Austritt aus der Nut 20. Damit die Vorbelastung stattfindet, muss die Drehposition der Wickeldüse 1 so gewählt werden, dass die Ausrichtung der Nut 20 nicht parallel zur Ablagerichtung ist, so dass eine Seitenwand 21, 22 als Biegekante wirkt.

Ist nun der Trägerkörper bspw. ein konvexer Trägerkörper, so besteht das Problem des radialen Ausbauchens der Wicklungen besonders markant, insbesondere bei Drahtdicken von etwa 1 Millimeter und mehr. Durch die genannte radiale Vorbelastung des Drahtes 4 ist letzterer durch den Wickelvorgang, insbesondere durch das radiale Vorbelasten, beim Ablegen auf den konvexen Trägerkörper vorteilhaft vorgespannt oder vorgeformt, was einer radialen Ausbauchung effizient entgegenwirkt. Ohne diese radiale Vorbelastung müsste die radiale Ausbauchung durch erhöhte Zugkräfte Längsrichtung des Drahtes 4 verhindert werden, was technisch sehr viel aufwändiger und den Wickelvorgang anfälliger auf Fehler, bspw. ein Reissen des Wickelguts 4, macht.

Durch die einfache Konstruktion mittels einer quer zur Längsachse L verlaufenden Nut 20 in der Mündungsfläche 17 ist die radiale Vorbelastung bzw. das tangentiale Biegen durch minimalen Aufwand an Material und unter mit minimalem Laufwiderstand des Drahtes 4 in diesen einbringbar. Dazu kann einfach die Drehposition der Wickeldüse 1 entsprechend geregelt werden. Der Draht 4 ist sauber geführt und weist ein Minimum an Kanten, insbesondere an Querkanten, im Lauf auf. Es müssen keine weiteren Bauteile zur Bereitstellung der Biegekante vorgesehen werden und die Düse 1 kann vorteilhaft einstückig sein. Die Wickeldüse 1 als geschlossene Nadel ist einfach und robust und weist ein Minimum an beweglichen Teilen und damit auch eine hohe Robustheit auf.

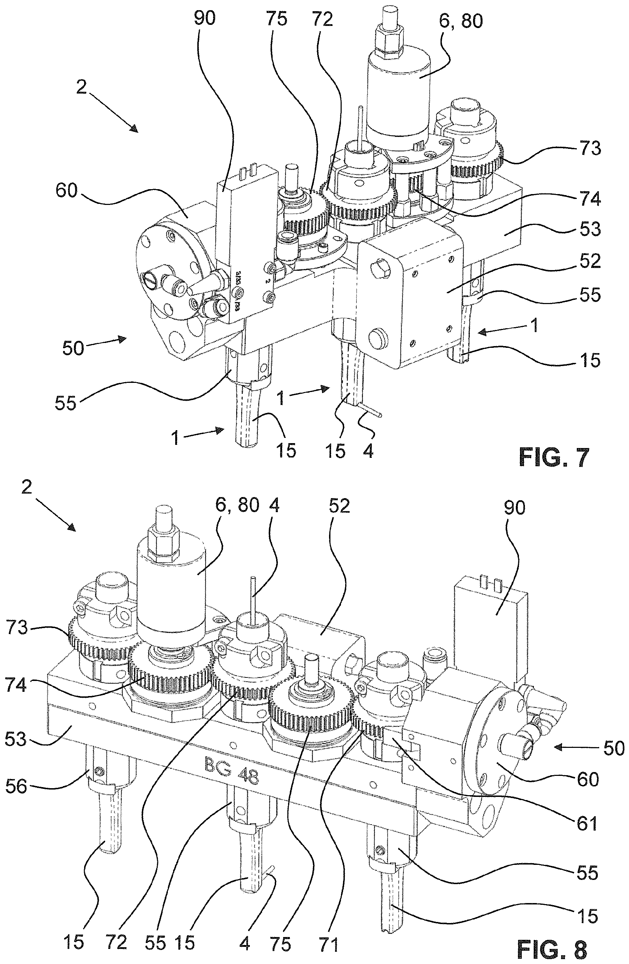

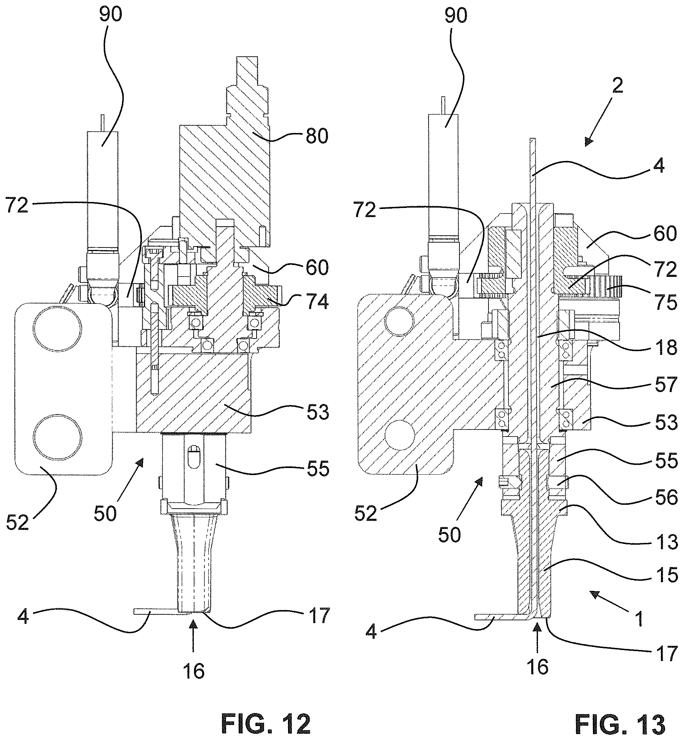

**Figuren 7** bis **13** zeigen eine bevorzugte Ausführungsform der erfindungsgemässen Wickelvorrichtung 2 mit Wickeldüsen 1 nach Figuren 1 bis 6. Anhand der Figuren 7 bis 13 wird nun die Düsenaufhängung 50 mit Wickeldüsen 1 erläutert. Die Aufhängung 50 weist einen Block in der Form eines im Wesentlichen quaderförmigen Grundkörpers 53 mit einem Flansch mit einer lateralen Montagefläche 52 auf. Durch den Grundkörper 53 verlaufen parallel zur Montagefläche 52, senkrecht zur Langseite des Blocks 53, drei Achsen mit einseitig am Grundkörper 53 hervorstehenden Wickeldüsen 1. Es werden hier aus effizienztechnischen Überlegungen gleich 3 Wickeldüsen 1 in einer Aufhängung 50 geführt. In anderen Ausführungsformen der Erfindung können auch nur 1 oder 2, oder eine Vielzahl von 4, 5 oder mehr Wickeldüsen vorgesehen sein, welche nach dem gleichen Prinzip angeordnet sind. Die Achsen der Wickeldüsen 1 verlaufen untereinander parallel, paarweise in einer Reihe benachbart und jeweils mit einem sich in Längsachse L der Wickeldüse 1 fortsetzenden Wickelarm 57 senkrecht durch den Block 53.

Der Wickelarm 57 ist rotierbar im Block 53 gelagert und weist düsenseitig ein Düsenfutter 55 als Düsenaufnahme auf, in welche der Schaft 11 der Wickeldüse 1 einschiebbar und mittels von stiftförmigen Verriegelungselementen 56 drehfest und positionsgerecht im Wickelarm 57 feststellbar ist. Der Wickelarm 57 weist in der achsenparallelen Verlängerung des Zuführkanals 18 der festgestellten Wickeldüse 1 eine Fortsetzung dieses Kanals 18 auf. Im Bereich von düsenseitigen und zufuhrseitigen Mündungsöffnungen des Wickelarms 57 sind die Kanten ebenfalls gerundet ausgestaltet und erlauben dort einen kontaktfreien Übergang des Drahtes 4 vom Kanal 18 des Wickelarmes 57 in den Kanal 18 der Düse 1. Der Wickelarm 57 erstreckt sich in einer einstückigen Ausgestaltung durch den Grundkörper 53 hindurch und ist rotierbar und verschiebungsfest im Körper 53 gelagert. Somit ist die im Düsenfutter 55 festgestellte Wickeldüse 1 positionsfest und rotierbar bezüglich des Blocks 53 gelagert.

Zufuhrseitig vom Block 53 ist unterhalb der Zufuhröffnung für den Draht 4 jeweils ein drehfest am und um den Wickelarm 57 greifendes Triebrad 71, 72, 73 vorgesehen. Das Triebrad 71, 72, 73 liegt jeweils achsgleich mit dem Wickelarm 57 und rotiert mit diesem und der Wickeldüse 1 mit. Die Triebräder 71, 72, 73 sind in einer Flucht parallel zu einer Langkante des Blockes 53 angeordnet und greifen über zufuhrseitig an Zwischenwellen angebrachte, weitere Zahnräder 74, 75 kämmend ineinander. Der lineare Zahnradzug 71, 72, 73, 74, 75 bildet also ein Getriebe, wobei auf jeder der drei Abtriebswellen eine Wickeldüse 1 vorgesehen ist und die Abtriebswellen über Zwischenwellen drehgekoppelt sind. Die Zahnräder 74, 75 auf den Zwischenwellen sind zu einer Langseite des Blocks 53 versetzt und kämmen jeweils zwei der Triebräder 71, 72, 73.

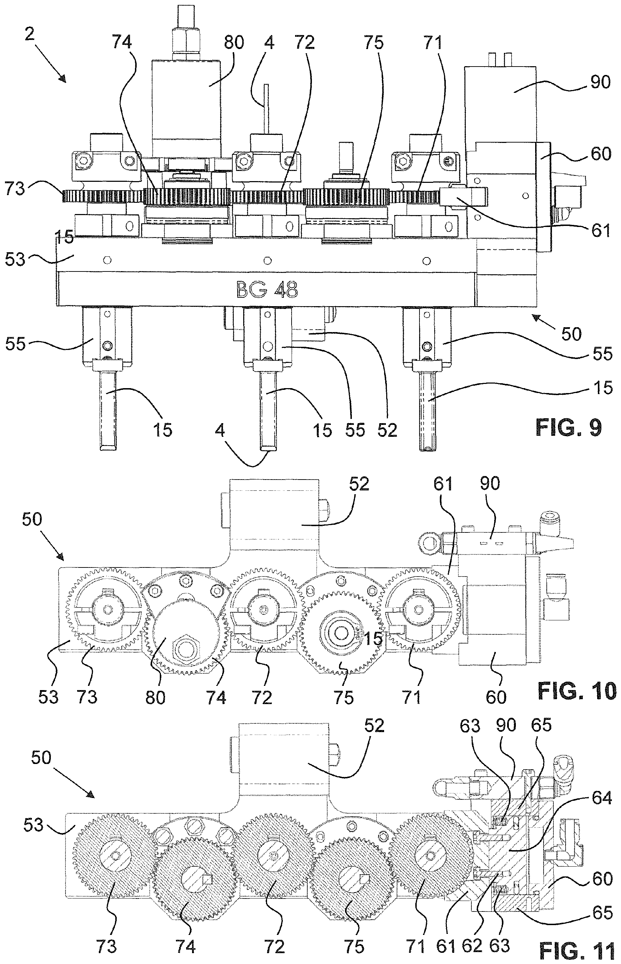

Am ersten Triebrad 71 (rechts aussen in Fig. 8 bis 11) greift eine Bremseinheit 60 an. Diese Bremseinheit 60 weist eine Bremsbacke 61 auf, mit welcher die Bremseinheit 60 bremsend auf das erste Triebrad 71 einwirken kann. In der Längsschnittdarstellung gemäss Fig. 11 ist erkennbar, dass die Bremsbacke 61 mittels einer Schraubverbindung 62 fest auf einen linearbeweglichen Bremsblock 64 (Bremsblockbewegung links-rechts in Fig. 11) geschraubt ist. Der Bremsblock 64 ist in einem Bremszylinder 65 geführt und wird durch Federelemente 63 in eine Freigabeposition gestellt. Über ein Schnellschaltventil 90 ist der Zylinder 65 über ein Druckfluid (bspw. Luft, Gas oder Öl) mit Druck beaufschlagbar, worauf der Bremsblock 64 kolbengleich im Zylinder 65 gegen die Federelemente 63 rückt und die Bremsbacke 61 aus der Freigabeposition in einer Bremsposition versetzt. Die Bremsbacke 61 drückt also bremsend auf das erste Triebrad 71, worauf eine Drehbewegung des ersten Triebrades 71 und damit des verzahnt und drehfest mit dem ersten Triebrad 71 in Verbindung stehenden Getriebes 72, 73, 74, 75 abbremsbar bzw. arretierbar ist. Über die Bremseinheit 60 ist somit eine Drehposition der Wickeldüsen 1 relativ zum Grundkörper 53 bzw. zum Trägerkörper des Wickelkörpers durch entsprechende Ansteuerung des Schnellschaltventils 90 wählbar. Weiter ist ein Drehgeber 66 (nicht dargestellt) vorgesehen, welcher die Drehposition der Düsenaufnahme 55 erfasst und der Bremseinheit 60 zur bremsenden Regelung der durch den Zug des durch die Nut 20 geführten Wickelguts 4 entstehenden Drehbewegung der Düsenaufnahme 55. Somit ist eine Drehposition dann im Wechselspiel des an der Wickeldüse 1 aufgrund der Drahtspannung ein Drehmoment ausübenden Wickeldrahts 4, des Drehreglers 66 und der Bremseinheit 60 regelbar. Eine entsprechende Maschinensteuerung ist vorgesehen, welche diese Wirkungen in gewünschter Weise aufeinander abstimmt.

Insbesondere in Figuren 7 bis 9 und 11 ist weiter ein geregelter Antrieb 80 erkennbar, welcher auf der Achse der vom ersten Triebrad 71 aus gesehen zweiten Zwischenwelle mit Zahnrad 74 sitzt. Die Ausführungsform mit Servomotor 80 ist eine alternative Ausführungsform zur Ausführungsform mit Drehregler 66 und Bremseinheit 60. Über diesen Servomotor 80 kann die Drehposition des Getriebes 71, 72, 73, 74, 75 jederzeit aktiv durch eine entsprechende Maschinensteuerung gesetzt werden. Die Ausführungsform mit dem Servomotor 80 ist somit eine elektrische bzw. elektronisch geregelte Variante zur hydraulischen bzw. pneumatisch geregelten Variante mit der Bremseinheit 60.

Mit der oben beschriebenen Wickeldüse 1, bzw. Düsenaufhängung 50 oder Wickelvorrichtung 2 kann also eine radiale Vorbeanspruchung durch tangentiales Biegen an einer Nutkante in ein entsprechend formbares Strangwickelgut 4 eingebracht werden, was sodann den vorteilhaften Effekt des besseren Anliegens des Wickelguts 4 in radialer Richtung am Trägerkörper hervorruft.

Die vorliegende Erfindung betrifft auch ein Wickelverfahren, vorzugsweise unter Verwendung der oben beschriebenen Vorrichtungen. Beim erfindungsgemässen Verfahren zur Wicklung eines Wickelkörpers wird unter Verwendung einer Düsenaufhängung ein strangförmiges Wickelgut 4 nach Zuführung durch eine Wickeldüse 1 unter einer Vorspannung in Ablagerichtung von der Wickeldüse 1 auf einen Trägerkörper abgelegt, wobei das Wickelgut 4 vor der Freigabe von der Mündungsfläche 17 der Wickeldüse 1 in Ablagerichtung von einer fest auf der Mündungsfläche 17 der Wickeldüse 1 und beabstandet zur Rotationsachse L angeordneten Anlagefläche 21, 22 elastisch bis plastisch durch Gegenbiegung derart vorgeformt wird, dass sich das Wickelgut 4 nachhaltig dicht an den Trägerkörper anlegt. Eine Wirkung der Anlagefläche 21, 22 ist vorzugsweise über eine zyklische Regelung der Drehposition der Düsenaufnahme 55 zyklisch geregelt.

Hierbei wird das strangförmige Wickelgut über eine Zuführeinrichtung 1, 2, 50 in eine Wickeldüse 1 geleitet und durch eine quer zur Längsachse L der Wickeldüse 1 in einer axialen Mündungsfläche 17 liegende Nut 20 geführt. Die Nut 20 wird hierbei mittels der rotierbar gelagerten Wickeldüse 1 unter einem vordefinierten Winkel zur Tangentialfläche des Trägerkörpers geführt. Der vordefinierte, wird fachmännisch gewählte Winkel hängt von der Geometrie des Trägerkörpers, einem Strangdurchmesser und Materialbeschaffenheit des Wickelguts 4 und der relativen Position der Wickeldüse 1 zum Trägerkörper sowie der Wickelgeschwindigkeit ab. Der Mündungswinkel der Nut 20 beträgt hierbei zwischen 0° (Nut 20 verläuft parallel zur Tangentialfläche des Trägerkörpers) und 90° (Nut 20 verläuft senkrecht zur Tangentialfläche des Trägerkörpers). Gemäss dem hier vorgeschlagenen Verfahren wird der Mündungswinkel zumindest zeitweise bei der Umwicklung des Trägerkörpers mit dem Wickelgut 4 auf einem endlichen Wert, bspw. etwa 10° bis etwa 85° gehalten, so dass Seitenwände 21, 22 der Nut 20 das Wickelgut 4 beim Austritt aus der Wickelnadel 1 eine Querkraft entgegensetzen, welche eine gewünschte Vorbelastung des Wickelguts 4 liefert.

Die oben beschriebene Wickeldüse 1, bzw. das genannte können zur Rotationswicklung mit stationärer Wickeldüse, zum Flyerwickeln mit rotierender Wickeldüse oder zum Hub-Schwenk-Wickeln mit einer bahngeführten Wickeldüse verwendet werden.

**BEZUGSZEICHENLISTE**

| | | | |
|---|---|---|---|
| 1 | Wickeldüse | 57 | Wickelarm |
| 2 | Wickelvorrichtung | 60 | Bremseinheit |
| 4 | Wickeldraht | 61 | Bremsbacke |
| 6 | Regeleinheit | 62 | Verschraubung |
| 11 | Düsenschaft | 63 | Federelement |
| 12 | Verrieglungsausnehmung | 64 | Bremsblock |
| 13 | Düsenflansch | 65 | Bremszylinder |
| 15 | Düsenkörper | 66 | Drehregler |
| 16 | Mündungsöffnung | 71 | erstes Triebrad |
| 17 | Mündungsfläche | 72 | zweites Triebrad |
| 18 | Zuführkanal | 73 | drittes Triebrad |
| 20 | Mündungsnut | 74 | erstes Zahnrad |
| 21, 22 | Seitenwand von 20 | 75 | zweites Zahnrad |
| 50 | Düsenaufhängung | 80 | geregelter Drehantrieb |
| 52 | Montagefläche | 90 | Schnellschaltventil |
| 53 | Grundkörper | L | Längsachse |
| 55 | Düsenfutter | Q | Querachse |
| 56 | Verriegelungselement | | |

## Patentansprüche

1. Düsenaufhängung (50) für mindestens eine Wickeldüse (1), insbesondere zur Herstellung einer elektrischen Spule auf einem Trägerkörper, wobei die Düsenaufhängung (55) mindestens eine Düsenaufnahme (55) für die Wickeldüse (1) zur drehfesten und positionsgerechten Aufnahme und Befestigung der Wickeldüse (1) in der Düsenaufnahmen (55) aufweist, wobei die Düsenaufnahme (55) derart rotierbar in der Düsenaufhängung (50) gelagert ist, dass die in der Düsenaufnahme (55) aufgenommene Wickeldüse (1) um eine quer zu einer Ablagerichtung von aus der Wickeldüse (1) austretendem Wickelgut (4) stehenden Längsachse (L) der Wickeldüse (1) rotierbar gelagert ist, wobei eine Drehposition der Düsenaufnahme (55) mittels der Düsenaufhängung (50) aktiv regelbar ist, **dadurch gekennzeichnet, dass** die Drehposition der Düsenaufnahme (55) mittels der Düsenaufhängung (50) derart geregelt ist, dass das Wickelgut (4) vor der Freigabe von der Mündungsfläche (17) der Wickeldüse (1) in Ablagerichtung von einer fest auf der Mündungsfläche (17) der Wickeldüse (1) und beabstandet zur Längsachse (L) angeordneten und im Wesentlichen parallel zur Längsachse (L) stehenden Anlagefläche (21 ;22) elastisch bis plastisch durch Gegenbiegung derart vorgeformt ist, dass sich das Wickelgut (4) nachhaltig dicht an den Trägerkörper anlegt, wobei eine Wirkung der Anlagefläche (21,22) über eine zyklische Regelung der Drehposition der Düsenaufnahme (55) zyklisch regelbar ist, indem ein Schnittwinkel der Anlagefläche (21 ;22) mit einer Tangentialfläche des Trägerkörpers durch einen Ablagepunkt des Wickelguts (2) auf dem Trägerkörper über die regelbare Drehposition der Düsenaufnahme (55) geregelt wird.

2. Düsenaufhängung (50) nach Anspruch 1, wobei eine Regeleinheit (6) vorgesehen ist, mittels welcher eine Drehbewegung der Düsenaufnahme (55) derart regelbar ist, dass die Düsenaufnahme (55) in einer vordefinierten Drehposition relativ zum Trägerkörper positionierbar und arretierbar ist.

3. Düsenaufhängung (50) nach einem der Anspruch 1 oder 2, **dadurch gekennzeichnet, dass** die Regeleinheit (6) einen Drehregler (66) und eine Bremseinheit (60) umfasst und dass die Drehbewegung der Düsenaufnahme (55) im Wesentlichen durch das Ablegen von durch die Wickeldüse (1) zugeführtem Wickelgut (4) auf dem Trägerkörper hervorgerufen und durch die Bremseinheit (60) bremsend geregelt ist, wobei die Düsenaufhängung (5) weiter einen Drehregler (66) umfasst, welcher die Drehposition der Düsenaufnahme (55) erfasst und der Bremseinheit (60) zur Regelung zur Verfügung stellt.

4. Düsenaufhängung (50) nach Anspruch 3, **dadurch gekennzeichnet, dass** die Bremseinheit (60) ein Schnellschaltventil (90) umfasst, über welches die Bremseinheit (60) betätigbar ist.

5. Düsenaufhängung (50) nach Anspruch 3 oder 4, **dadurch gekennzeichnet, dass** eine Bremswirkung auf die rotierende Düsenaufnahme (55) durch ein von der Bremseinheit (60) auf die rotierbare Düsenaufnahme (55) übertragenes Gegendrehmoment im Bereich von 0.1 bis 5 Newtonmeter pro Wickeldüse (1) erzeugbar ist.

6. Düsenaufllängung (50) nach einem der Ansprüche 1 bis 2, **dadurch gekennzeichnet, dass** die Regeleinheit (6) einen geregelten Antrieb (80) umfasst, mittels welchem die Drehbewegung der Düsenaufnahme (55) regelbar ist.

7. Düsenaufhängung (50) nach einem der Ansprüche 1 bis 6, **dadurch gekennzeichnet, dass** eine Vielzahl von Düsenaufnahmen (55) für jeweils eine Wickeldüse (1) vorgesehen ist, welche vorzugsweise in einer Reihe angeordnet und zur Linearwicklung einer Vielzahl von Wickelkörpern geeignet sind.

8. Düsenaufhängung (50) nach Anspruch 7, **dadurch gekennzeichnet, dass** die Düsenaufnahmen (55) über ein Getriebe (71,72,73,74,75) untereinander drehgekoppelt sind, wobei gegebenenfalls die Bremseinheit (60) und/oder der Drehregler und/oder der geregelte Antrieb (80) vorzugsweise direkt auf dieses Getriebe (71,72,73,74,75) wirkt.

9. Verfahren zur Wicklung eines Wickelkörpers unter Verwendung einer Düsenaufhängung (50) nach einem der Ansprüche 1 bis 8, wobei ein strangförmiges Wickelgut (4) nach Zuführung durch eine Wickeldüse (1) unter einer Vorspannung in Ablagerichtung von der Wickeldüse (1) auf einen Trägerkörper abgelegt wird, **dadurch gekennzeichnet, dass** das Wickelgut (4) vor der Freigabe von der Mündungsfläche (17) der Wickeldüse (1) in Ablagerichtung von einer fest auf der Mündungsfläche (17) der Wickeldüse (1) und beabstandet zur Längsachse (L) angeordneten und im Wesentlichen parallel zur Längsachse (L) stehenden Anlagefläche (21 ;22) elastisch bis plastisch durch Gegenbiegung derart vorgeformt wird, dass sich das Wickelgut (4) nachhaltig dicht an den Trägerkörper anlegt, wobei eine Wirkung der Anlagefläche (21,22) über eine zyklische Regelung der Drehposition der Düsenaufnahme (55) zyklisch geregelt ist, indem ein Schnittwinkel der Anlagefläche (21;22) mit einer Tangentialfläche des Trägerkörpers durch einen Ablagepunkt des Wickelguts (2) auf dem Trägerkörper über die regelbare Drehposition der Düsenaufnahme (55) geregelt wird.

10. Verfahren nach Anspruch 9, **dadurch gekennzeichnet, dass** eine Drehposition der Wickeldüse (1) relativ zum Trägerkörper mittels eines Drehreglers und unter Ausnutzung der Vorspannung des Wickelguts (4) oder mittels eines geregelten Antriebs (80) und jeweils einer Bremseinheit (60) zyklisch und passend auf den Trägerköper eingestellt wird.

11. Verfahren nach Anspruch 9 oder 10, **dadurch gekennzeichnet, dass** als Wickelgut (4) ein strangförmiger elektrischer Leiter, insbesondere ein isolierter Metalldraht, vorzugsweise mit einem Durchmesser von 0.5 bis 2.5 Millimeter verwendet wird.

12. Wickeldüse (1) für eine Düsenaufhängung (50) nach einem der Ansprüche 1 bis 8 zur Ablage von strangförmigem Wickelgut (4) auf einen Trägerkörper, wobei die Wickeldüse (1) einen im Wesentlichen der Längsachse (L) folgenden Zuführkanal (18) zur Zuführung des Wickelguts (4) aufweist, wobei der Zuführkanal (18) in einer Mündungsöffnung (16) zur Abgabe des Wickelguts (4) endet, wobei diese Mündungsöffnung (16) in einer quer zur Längsachse (L) stehenden Mündungsfläche (17) liegt, und wobei mindestens eine fest auf der Mündungsfläche (17) angeordnete Anlagefläche (21;22) zur Führung des Wickelguts (4) in einer Querrichtung zur Längsachse (L) vorgesehen ist und wobei diese Anlagefläche (21 ;22) im Wesentlichen parallel zur Längsachse (L) steht, sodass durch Rotieren der Wickeldüse (1) um die Längsachse (L) eine Wirkung der Anlagefläche (21;22) auf das Wickelgut (4) und insbesondere eine Orientierung der Anlagefläche zum Trägerkörper veränderbar ist, dass in der Mündungsfläche (17) eine Nut (20) mit Seitenwänden (21,22) zur Aufnahme des aus der Mündungsöffnung (16) austretenden Wickelguts (4) angeordnet ist, wobei mindestens eine der Seitenwände (21 ;22) die Anlagefläche (21 ;22) bildet, und dass sich die Nut entlang einer Querachse (Q) erstreckt, welche im Wesentlichen rechtwinklig zur besagten Längsachse (L) verläuft, so dass das Wickelgut (4) vor der Freigabe von der Mündungsfläche (17) der Wickeldüse (1) in Ablagerichtung von einer fest auf der Mündungsfläche (17) der Wickeldüse (1) und beabstandet zur Längsachse (L) angeordneten und im Wesentlichen parallel zur Längsachse (L) stehenden Anlagefläche (21, 22) elastisch bis plastisch durch Gegenbiegung derart vorformbar ist, dass sich das Wickelgut (4) nachhaltig dicht an den Trägerkörper anlegt, wobei eine Wirkung der Anlagefläche (21,22) über eine zyklische Regelung der Drehposition der Düsenaufnahme (55) zyklisch regelbar ist, indem ein Schnittwinkel der Anlagefläche (21, 22) mit einer Tangentialfläche des Trägerkörpers durch einen Ablagepunkt des Wickelguts auf dem Trägerkörper über die regelbare Drehposition der Düsenaufnahme (55) geregelt wird.

13. Wickeldüse (1) nach Anspruch 12, **dadurch gekennzeichnet, dass** die besagte Anlagefläche (21 ;22) parallel und seitlich beabstandet zur Längsachse (L) verläuft und/oder dass sich die Nut (20) auf der Mündungsfläche (17) von der axialen vorzugsweise kreisförmigen Mündungsöffnung (16) quer zur Seite hin erstreckt und eine seitliche Mantelfläche der Wickeldüse (1) durchstösst.

14. Wickeldüse (1) nach Anspruch 12, **dadurch gekennzeichnet, dass** eine Breite der Nut (20) 50% bis 150% eines Durchmessers des Zuführkanals (18), vorzugsweise 100% des Durchmessers des Zuführkanals (18) beträgt, und dass eine Tiefe der Nut (20) 30% bis 100% des Durchmessers des Zuführkanals (18), vorzugsweise 50% bis 75% des Durchmessers des Zuführkanals (18) beträgt und/oder dass eine Querschnittsgestalt der Nut (20) im Wesentlichen teilkreisförmig, vorzugsweise halbkreisförmig ist.

## Claims

1. A nozzle suspension (50) for at least one winding nozzle (1), in particular for producing an electric coil on a carrier body, wherein the nozzle suspension (50) comprises at least one nozzle receiving portion (55) for the winding nozzle (1) for the purpose of receiving and securing the winding nozzle (1) in the correct position and such that it does not rotate in the nozzle receiving portion (55), wherein the nozzle receiving portion (55) is mounted rotatably in the nozzle suspension (50) such that the winding nozzle (1) received in the nozzle receiving portion (55) is mounted rotatably about a winding nozzle (1) longitudinal axis (L) that runs transversely to a deposit direction of winding material (4) exiting from the winding nozzle (1), wherein a rotational position of the nozzle receiving portion (55) can be actively controlled by a means of the nozzle suspension (50), **characterized in that** the rotational position of the nozzle receiving portion (55) is controlled by means of the nozzle suspension (50) such that the winding material (4), prior to the release from the mouth surface (17) of the winding nozzle (1) in the deposit direction, is pre-formed elastically to plastically by counter-bending by a bearing surface (21; 22) arranged fixedly on the mouth surface (17) of the winding nozzle (1) and at a distance from the longitudinal axis (L) and running substantially parallel to the longitudinal axis (L), such that the winding material (4) bears tightly in a sustaining manner against the carrier body, wherein an effect of the bearing surface (21, 22) can be controlled cyclically via a cyclical control of the rotational position of the nozzle receiving portion (55) **in that** an angle of intersection of the bearing surface (21;22) with a tangential surface of the carrier body through a point of contact of the winding material (2) on the carrier body can be controlled via the controllable rotational position of the nozzle receiving portion (55).

2. The nozzle suspension (50) as claimed in claim 1, wherein a control unit (6) is provided, by means of which a rotational movement of the nozzle receiving portion (55) can be controlled in such a way that the nozzle receiving portion (55) can be positioned in a predefined rotational position relative to the carrier body.

3. The nozzle suspension (50) as claimed in one of claims 1 or 2, **characterized in that** the control unit (6) has a rotary control (66) and a brake unit (60), and **in that** the rotational movement of the nozzle receiving portion (55) is caused substantially by the deposit on the carrier body of winding material (4) fed through the winding nozzle (1) and is controlled in a braking manner by the brake unit (60), wherein the nozzle suspension (5) also comprises a rotary control (66) that detects the rotational position of the nozzle receiving portion (55) and makes it available to the brake unit (60) for control.

4. The nozzle suspension (50) as claimed in claim 3, **characterized in that** the brake unit (60) comprises a quick-acting valve (90), via which the brake unit (60) can be actuated.

5. The nozzle suspension (50) as claimed in claim 3 or 4, **characterized in that** a braking effect on the rotating nozzle receiving portion (55) can be generated by a countertorque transmitted from the brake unit (60) to the rotatable nozzle receiving portion (55) in the range of 0.1 to 5 newton meters per winding nozzle (1).

6. The nozzle suspension (50) as claimed in one of claims 1 to 2, **characterized in that** the control unit (6) comprises a controlled drive (80), by means of which the rotational movement of the nozzle receiving portion (55) can be controlled.

7. The nozzle suspension (50) as claimed in one of claims 1 to 6, **characterized in that** a plurality of nozzle receiving portions (55) are provided, each intended for a winding nozzle (1), these nozzle receiving portions preferably being arranged in a row and being suitable for the linear winding of a plurality of wound bodies.

8. The nozzle suspension (50) as claimed in claim 7, **characterized in that** the nozzle receiving portions (55) are coupled to one another in rotation via a gearing (71, 72, 73, 74, 75), wherein the brake unit (60) and/or the rotary control and/or the controlled drive (80) preferably acts/act directly on this gearing (71, 72, 73, 74, 75) where applicable.

9. A method for winding a wound body with use of a nozzle suspension (50) as claimed in one of claims 1 to 8, wherein a strand-shaped winding material (4), after being fed through a winding nozzle (1), is deposited onto a carrier body under a preload in a deposit direction from the winding nozzle (1), **characterized in that** the winding material (4), prior to the release from the mouth surface (17) of the winding nozzle (1) in the deposit direction, is deformed elastically to plastically by counter-bending by a bearing surface (21; 22) arranged fixedly on the mouth surface (17) of the winding nozzle (1) and at a distance from the longitudinal axis (L) and running substantially parallel to the longitudinal axis (L), such that the winding material (4) bears tightly in a sustained manner against the carrier body, wherein an effect of the bearing surface (21, 22) is controlled cyclically via a cyclical control of the rotational position of the nozzle receiving portion (55) **in that** an angle of intersection of the bearing surface (21;22) with a tangential surface of the carrier body through a point of contact of the winding material (2) on the carrier body can be controlled via the controllable rotational position of the nozzle receiving portion (55).

10. The method as claimed in claim 9, **characterized in that** a rotational position of the winding nozzle (1) relative to the carrier body is adjusted cyclically and in a manner matching the carrier body by means of a rotary control and with use of the pre-stress of the winding material (4) or by means of a controlled drive (80) and of a brake unit (60).

11. The method as claimed in claim 9 or 10, **characterized in that** a strand-shaped electrical conductor, in particular an insulated metal wire, preferably having a diameter of 0.5 to 2 millimeters, is used as winding material (4).

12. A winding nozzle (1) for a nozzle suspension (50) as claimed in one of claims 1 to 8 for depositing strand-shaped winding material (4) on a carrier body, wherein the winding nozzle (1) has a feed channel (18) substantially following the longitudinal axis (L) for feeding the winding material (4), wherein the feed channel (18) ends in a mouth opening (16) for dispensing the winding material (4), wherein this mouth opening (16) lies in a mouth surface (17) arranged transversely to the longitudinal axis (L), and wherein at least one bearing surface (21; 22) arranged fixedly on the mouth surface (17) is provided in order to guide the winding material (4) in a transverse direction relative to the longitudinal axis (L), and wherein this bearing surface (21; 22) runs substantially parallel to the longitudinal axis (L) such that an effect of the bearing surface (21; 22) on the winding material (4) and in particular an orientation of the bearing surface relative to the carrier body can be changed by rotating the winding nozzle (1) about the longitudinal axis (L), in that a groove (20) having side walls (21, 22) for receiving the winding material (4) exiting from the mouth opening (16) is arranged in the mouth surface (17), wherein at least one of the side walls (21; 22) forms the bearing surface (21; 22), and in that the groove extends along a transverse axis (Q), which runs substantially at right angles to said longitudinal axis (L) such that the winding material (4), prior to the release from the mouth surface (17) of the winding nozzle (1) in the deposit direction, is pre-formed elastically to plastically by counter-bending by a bearing surface (21; 22) arranged fixedly on the mouth surface (17) of the winding nozzle (1) and at a distance from the longitudinal axis (L) and running substantially parallel to the longitudinal axis (L), such that the winding material (4) bears tightly in a sustaining manner against the carrier body, wherein an effect of the bearing surface (21, 22) can be controlled cyclically via a cyclical control of the rotational position of the nozzle receiving portion (55) in that an angle of intersection of the bearing surface (21;22) with a tangential surface of the carrier body through a point of contact of the winding material (2) on the carrier body can be controlled via the controllable rotational position of the nozzle receiving portion (55).

13. The winding nozzle (1) as claimed in claims 12, **characterized in that** said bearing surface (21; 22) runs parallel to and laterally at a distance from the longitudinal axis (L), and/or **in that** the groove (20) extends on the mouth surface (17) from the axial preferably circular mouth opening (16) transversely toward the side and penetrates a lateral circumferential surface of the winding nozzle (1).

14. The winding nozzle (1) as claimed in claim 12, **characterized in that** a width of the groove (20) is 50% to 150% of a diameter of the feed channel (18), preferably 100% of the diameter of the feed channel (18), and **in that** a depth of the groove (20) is 30% to 100% of the diameter of the feed channel (18), preferably 50% to 75% of the diameter of the feed channel (18), and/or **in that** a cross-sectional design of the groove (20) is formed substantially as a part circle, preferably as a semi-circle.

## Revendications

1. Suspension de buse (50) pour au moins une buse d'enroulement (1), en particulier pour la fabrication d'une bobine électrique sur un corps de support, dans laquelle la suspension de buse (55) présente au moins un logement de buse (55) pour la buse d'enroulement (1) pour le logement et la fixation solidaire en rotation et en position correcte de la buse d'enroulement (1) dans le logement de buse (55), dans laquelle le logement de buse (55) est monté de façon rotative dans la suspension de buse (50), de telle manière que la buse d'enroulement (1) logée dans le logement de buse (55) soit montée de façon rotative autour d'un axe longitudinal (L) de la buse d'enroulement (1) orienté transversalement à une direction de dépôt du produit à enrouler (4) sortant de la buse d'enroulement (1), dans laquelle une position de rotation du logement de buse (55) est réglable activement au moyen de la suspension de buse (50), **caractérisée en ce que** la position de rotation du logement de buse (55) est réglée au moyen de la suspension de buse (50), de telle manière que le produit à enrouler (4) soit, avant la libération de la face de sortie (17) de la buse d'enroulement (1), préformé dans la direction de dépôt, de façon élastique à plastique par contre-flexion, par une face d'appui (21; 22) agencée de façon fixe sur la face de sortie (17) de la buse d'enroulement (1) et à distance de l'axe longitudinal (L) et orientée essentiellement parallèlement à l'axe longitudinal (L), de telle manière que le produit à enrouler (4) s'applique en permanence étroitement sur le corps de support, dans laquelle une action de la face d'appui (21, 22) est réglable de façon cyclique par un réglage cyclique de la position de rotation du logement de buse (55), en réglant un angle d'intersection de la face d'appui (21; 22) avec une face tangentielle du corps de support par un point de dépôt du produit à enrouler (2) sur le corps de support au moyen de la position de rotation réglable du logement de buse (55).

2. Suspension de buse (50) selon la revendication 1, dans laquelle il est prévu une unité de réglage (6), au moyen de laquelle un mouvement de rotation du logement de buse (55) est réglable, de telle manière que le logement de buse (55) puisse être positionné et arrêté dans une position de rotation prédéfinie par rapport au corps de support.

3. Suspension de buse (50) selon une des revendications 1 ou 2, **caractérisée en ce que** l'unité de réglage (6) comprend un régulateur rotatif (66) et une unité de frein (60), et **en ce que** le mouvement de rotation du logement de buse (55) est provoqué essentiellement par le dépôt de produit à enrouler (4) fourni par la buse d'enroulement (1) sur le corps de support et est réglé par freinage par l'unité de frein (60), dans laquelle la suspension de buse (5) comprend en outre un régulateur tournant (66), qui détecte la position de rotation du logement de buse (55) et l'envoie à l'unité de frein (60) pour le réglage.

4. Suspension de buse (50) selon la revendication 3, **caractérisée en ce que** l'unité de frein (60) comprend une soupape à fermeture rapide (90), par laquelle l'unité de frein (60) peut être actionnée.

5. Suspension de buse (50) selon la revendication 3 ou 4, **caractérisée en ce qu'**une action de freinage sur le logement de buse tournant (55) peut être produite par un couple de rotation opposé, de l'ordre de 0,1 à 5 newton-mètre par buse d'enroulement (1), transmis de l'unité de frein (60) au logement de buse tournant (55).

6. Suspension de buse (50) selon une des revendications 1 à 2, **caractérisée en ce que** l'unité de réglage (6) comprend un entraînement régulé (80), au moyen duquel le mouvement de rotation du logement de buse (55) est réglable.

7. Suspension de buse (50) selon l'une quelconque des revendications 1 à 6, **caractérisé en ce qu'**il est prévu une multiplicité de logements de buse (55) pour une buse d'enroulement (1) respectivement, qui sont disposés de préférence en une rangée et qui conviennent pour l'enroulement linéaire d'une multiplicité de corps d'enroulement.

8. Suspension de buse (50) selon la revendication 7, **caractérisé en ce que** les logements de buse (55) sont couplés en rotation les uns avec les autres au moyen d'une transmission (71, 72, 73, 74, 75), dans laquelle éventuellement l'unité de frein (60) et/ou le régulateur rotatif et/ou l'entraînement régulé (80) agit de préférence directement sur cette transmission (71, 72, 73, 74, 75).

9. Procédé d'enroulement d'un corps d'enroulement avec utilisation d'une suspension de buse (50) selon l'une quelconque des revendications 1 à 8, dans lequel on dépose un produit à enrouler filiforme (4) depuis une buse d'enroulement (1) sur un corps de support après sa fourniture par la buse d'enroulement (1) sous une précontrainte dans la direction de dépôt, **caractérisé en ce que**, avant la libération de la face de sortie (17) de la buse d'enroulement (1), on préforme le produit à enrouler (4) dans la direction de dépôt, de façon élastique à plastique par contre-flexion, par une face d'appui (21; 22) agencée de façon fixe sur la face de sortie (17) de la buse d'enroulement (1) et à distance de l'axe longitudinal (L) et orientée essentiellement parallèlement à l'axe longitudinal (L), de telle manière que le produit à enrouler (4) s'applique en permanence étroitement sur le corps de support, dans lequel on règle une action de la face d'appui (21, 22) de façon cyclique par un réglage cyclique de la position de rotation du logement de buse (55), en réglant un angle d'intersection de la face d'appui (21; 22) avec une face tangentielle du corps de support par un point de dépôt du produit à enrouler (2) sur le corps de support au moyen de la position de rotation réglable du logement de buse (55).

10. Procédé selon la revendication 9, **caractérisé en ce que** l'on règle d'une manière cyclique et adaptée au corps de support une position de rotation de la buse d'enroulement (1) par rapport au corps de support au moyen d'un régulateur tournant et en utilisant la précontrainte du produit à enrouler (4) ou au moyen d'un entraînement régulé (80) et à chaque fois d'une unité de frein (60).

11. Procédé selon la revendication 9 ou 10, **caractérisé en ce que** l'on utilise comme produit à enrouler (4) un conducteur électrique filiforme, en particulier un fil métallique isolé, de préférence avec un diamètre de 0,5 à 2,5 millimètres.

12. Buse d'enroulement (1) pour une suspension de buse (50) selon l'une quelconque des revendications 1 à 8, pour le dépôt de produit à enrouler filiforme (4) sur un corps de support, dans laquelle la buse d'enroulement (1) présente un canal d'alimentation (18) suivant essentiellement l'axe longitudinal (L) pour la fourniture du produit à enrouler (4), dans laquelle le canal d'alimentation (18) se termine dans une ouverture de sortie (16) pour délivrer le produit à enrouler (4), dans laquelle cette ouverture de sortie (16) est située dans une face de sortie (17) orientée transversalement à l'axe longitudinal (L), et dans laquelle il est prévu au moins une face d'appui (21; 22) disposée de façon fixe sur la face de sortie (17) pour le guidage du produit à enrouler (4) dans une direction transversale à l'axe longitudinal (L) et dans laquelle cette face d'appui (21; 22) est essentiellement parallèle à l'axe longitudinal (L), de telle manière que par rotation de la buse d'enroulement (1) autour de l'axe longitudinal (L) une action de la face d'appui (21; 22) sur le produit à enrouler (4) et en particulier une orientation de la face d'appui par rapport au corps de support puisse être modifiée, en ce qu'une rainure (20) avec des parois latérales (21, 22) est agencée dans la face de sortie (17) en vue de recevoir le produit à enrouler (4) sortant de l'ouverture de sortie (16), dans laquelle au moins une des parois latérales (21; 22) forme la face d'appui (21; 22), et en ce que la rainure s'étend le long d'un axe transversal (Q), qui est essentiellement perpendiculaire audit axe longitudinal (L), de telle manière que le produit à enrouler (4) puisse être préformé, avant la libération de la face de sortie (17) de la buse d'enroulement (1), de façon élastique à plastique par une contre-flexion dans la direction de dépôt par une face d'appui (21, 22) agencée de façon fixe sur la face de sortie (17) de la buse d'enroulement (1) et à distance de l'axe longitudinal (L) et essentiellement parallèlement à l'axe longitudinal (L), en ce que le produit à enrouler (4) s'applique en permanence étroitement sur le corps de support, dans laquelle une action de la face d'appui (21, 22) peut être réglée de façon cyclique par un réglage cyclique de la position de rotation du logement de buse (55), en réglant un angle d'intersection de la face d'appui (21, 22) avec une face tangentielle du corps de support par un point de dépôt du produit à enrouler sur le corps de support au moyen de la position de rotation réglable du logement de buse (55).

13. Buse d'enroulement (1) selon la revendication 12, **caractérisée en ce que** ladite face d'appui (21; 22) s'étend parallèlement à et latéralement à distance de l'axe longitudinal (L) et/ou **en ce que** la rainure (20) s'étend sur la face de sortie (17) depuis l'ouverture de sortie axiale de préférence circulaire (16) transversalement vers le côté et traverse une surface latérale de la buse d'enroulement (1).

14. Buse d'enroulement (1) selon la revendication 12, **caractérisée en ce qu'**une largeur de la rainure (20) vaut de 50 % à 150 % d'un diamètre du canal d'alimentation (18), de préférence 100 % du diamètre du canal d'alimentation (18), et **en ce qu'**une profondeur de la rainure (20) vaut 30 % à 100 % du diamètre du canal d'alimentation (18), de préférence 50 % à 75 % du diamètre du canal d'alimentation (18), et/ou **en ce qu'**une forme de section transversale de la rainure (20) est essentiellement partiellement circulaire, de préférence semi-circulaire.
